# EUROPÄISCHE PATENTSCHRIFT

(11) **EP 3 626 129 B1**
(45) Veröffentlichungstag und Bekanntmachung des Hinweises auf die Patenterteilung: **09.03.2022**
(21) Anmeldenummer: 19181089.4
(22) Anmeldetag: 19.06.2019
(51) Int. Cl.: F16B 12/40, A47C 4/14, A47C 4/38

(54) **MÖBEL MIT VERBINDUNGSELEMENT FÜR MÖBELSTÄBE**
FURNITURE WITH CONNECTION ELEMENT FOR FURNITURE RODS
MEUBLE AVEC ÉLÉMENT DE RACCORDEMENT POUR BARRES DE MEUBLE

(30) Priorität: 20.09.2018 DE 102018123101
(43) Veröffentlichungstag der Anmeldung: 25.03.2020
(73) Patentinhaber: Löffler GmbH, 91244 Reichenschwand (DE)
(72) Erfinder: MOCNIK, Friedrich M., 3340 Waidhofen/Ybbs (AT)
(74) Vertreter: v. Bezold & Partner Patentanwälte - PartG mbB

(56) Entgegenhaltungen:
- US-A- 1 652 942
- US-A- 2 262 161
- US-A1- 2007 216 212
- US-A1- 2018 255 931

## Beschreibung

Die Erfindung betrifft ein Möbelstück (z.B. Sessel) mit Verbindungselementen zur mechanischen Verbindung von sich kreuzenden Möbelstäben.

Aus dem Stand der Technik sind Holzstühle bekannt, die aus mehreren Möbelstäben zusammengesetzt sind, wobei die Möbelstäbe durch Verbindungsschnüre zusammengehalten werden, die durch Querbohrungen in den Möbelstäben hindurchgeführt sind. An ihren Enden sind die Verbindungsschnüre dann verknotet. Die Verbindung der Möbelstäbe ist hierbei jedoch noch nicht befriedigend. Zum allgemeinen technischen Hintergrund der Erfindung ist auch hinzuweisen auf DE 20 2013 003 781 U, DE 44 06 334 A1, DE 17 99 864 U, US 1 652 942 A und EP 0 252 170 A1. Diese Druckschriften offenbaren ähnliche Verbindungselemente wie Anspruch 1, jedoch sind diese bekannten Anordnungen noch nicht vollständig befriedigend.

Schließlich offenbart US 2 262 161 A ein gattungsgemäßes Verbindungsmittel.

Diese bekannten Verbindungsmittel sind jedoch noch nicht vollständig befriedigend.

Der Erfindung liegt deshalb die Aufgabe zugrunde, ein entsprechend verbessertes Möbel mit Verbindungselementen zur mechanischen Verbindung von sich kreuzenden Möbelstäben zu schaffen. Diese Aufgabe wird durch ein erfindungsgemäßes Möbel gemäß dem Hauptanspruch gelöst.

Das erfindungsgemäße Möbel umfasst zunächst in Übereinstimmung mit dem Stand der Technik eine Verbindungsschnur, die durch Querbohrungen in den miteinander zu verbindenden Möbelstäben hindurchgeführt wird.

Das erfindungsgemäße Möbel sieht zusätzlich vor, dass die Verbindungsschnur an ihren Enden jeweils eine geschlossene Schlaufe aufweist. In diese Schlaufen kann jeweils ein Knopf eingefädelt werden, der im eingefädelten Zustand verhindert, dass die Verbindungsschnur durch die Querbohrungen rutschen kann. Der Knopf ersetzt also quasi die Verknotung bei den eingangs beschriebenen bekannten Möbeln mit einer Verbindungsschnur.

Gemäß der Erfindung sind die Knöpfe jeweils im Wesentlichen scheibenförmig und weisen zum Einfädeln in die Schlaufen der Verbindungsschnur jeweils zwei einander gegenüber liegende Aussparungen auf.

Vorzugsweise sind die Knöpfe jeweils im Wesentlichen kreisscheibenförmig, wobei die Aussparungen dann vorzugsweise im Wesentlichen kreissektorförmig sind.

Beispielsweise können sich die kreissektorförmigen Aussparungen in den Knöpfen in Umfangsrichtung der kreisscheibenförmigen Knöpfe über einen Winkel erstrecken, der im Bereich von 5°-90°, 10°-70°, 20°-50° oder 25°-40° liegt.

Bei der Montage können die kreisscheibenförmigen Knöpfe mit ihrer zylindrischen Mantelfläche auf der Oberfläche eines der Möbelstäbe aufgesetzt werden, wobei die Schlaufe in die Aussparungen in dem Knopf eingefädelt wird. Anschließend kann der Knopf dann entlang seiner zylindrischen Mantelfläche abgerollt werden, bis der Knopf vollständig in die Schlaufe eingefädelt ist. Anschlie-ßend muss der Knopf dann lediglich um eine Querachse gedreht werden, so dass die Schlaufe dann in den beiden gegenüber liegenden Aussparungen des Knopfs geführt wird. Bei dieser Abrollbewegung beim Einfädeln in die Schlaufe wird auch eine Spannung in der Verbindungsschnur erzeugt, so dass die miteinander zu verbindenden Möbelstäbe mit einer entsprechenden Spannung zusammengezogen werden.

In dem bevorzugten Ausführungsbeispiel der Erfindung weisen die Aussparungen an ihrem innen liegenden Ende jeweils eine Ausrundung auf, wobei die Verbindungsschnur im Bereich der Schlaufe im montierten Zustand in dieser Ausrundung liegt. Vorzugsweise haben diese Ausrundungen jeweils einen Durchmesser, der größer ist als die Dicke der Verbindungsschnur.

Hierbei besteht auch die Möglichkeit, dass die Ausrundungen jeweils eine Engstelle in den Aussparungen bilden, um beim Einfädeln der Verbindungsschnur ein Einhebeln des Knopfs in die Schlaufe der Verbindungsschnur zu ermöglichen.

In dem bevorzugten Ausführungsbeispiel der Erfindung haben die Schlaufen jeweils eine bestimmte Schlaufenweite, wobei die Schlaufenweite vorzugsweise größer ist als der Abstand zwischen den gegenüber liegenden Aussparungen in den scheibenförmigen Knöpfen. Dies ist sinnvoll, damit der Knopf in die Schlaufe eingefädelt werden kann. Darüber hinaus ist es vorteilhaft, wenn die Summe aus dem Abstand zwischen den gegenüber liegenden Aussparungen und der radialen Tiefe der Aussparungen in dem Knopf kleiner ist als die Schlaufenweite. Dies ist sinnvoll, damit der Knopf beim Einfädeln in die Schlaufe einfach auf seiner zylindrischen Mantelfläche abrollen kann.

In dem bevorzugten Ausführungsbeispiel besteht die Verbindungsschnur aus Kunststoff (z.B. Polyamid) und ist im Wesentlichen starr ohne wesentliche Elastizität in Längsrichtung. Es ist jedoch alternativ auch möglich, dass die Verbindungsschnur in Längsrichtung elastisch ist, um eine Spannkraft zwischen den miteinander verbundenen Möbelstäben zu erzeugen.

Die beiden Knöpfe des Verbindungselements bestehen dagegen vorzugsweise aus Kunststoff, wie beispielsweise einem Thermoplast (z.B. POM: Polyoxymethylen). Die Knöpfe können jedoch alternativ auch aus Metall oder Metalllegierungen (z.B. Messing) bestehen.

Die Möbelstäbe bestehen dagegen vorzugsweise aus Holz (z.B. Esche, Fichte, Buche) und haben vorzugsweise einen runden (z.B. kreisrunden, ovalen) Querschnitt. Es ist jedoch alternativ auch möglich, dass der Querschnitt der Möbelstäbe eckig ist.

Weiterhin ist zu erwähnen, dass die miteinander verbundenen Möbelstäbe im verbundenen Zustand vorzugsweise relativ zueinander schwenkbar sind.

In einem bevorzugten Ausführungsbeispiel der Erfindung bilden die Möbelstäbe ein Gestell, wobei in das Gestell ein Sitzbezug eingehängt ist. Das Möbel besteht dann also vorzugsweise nur aus den Möbelstäben, dem Sitzbezug und den Verbindungselementen.

In dem bevorzugten Ausführungsbeispiel der Erfindung weist das Gestell mehrere Kreuze auf, die jeweils aus zwei Möbelstäben bestehen, die mittig durch ein Verbindungselement miteinander zu einem Kreuz verbunden sind. So besteht das Gestell vorzugsweise aus jeweils einem Kreuz an der Rückseite und an der Vorderseite und jeweils einem Kreuz an den beiden gegenüber liegenden Seiten. Das rückseitige Kreuz ist dann mit den beiden seitlichen Kreuzen verbunden, wie auch das vordere Kreuz mit den beiden seitlichen Kreuzen verbunden ist und zwar jeweils durch Verbindungselemente gemäß der Erfindung, welche die Möbelstäbe der verschiedenen Kreuze jeweils an den Enden jeweils miteinander verbunden.

In die oberen Enden der Möbelstäbe dieses Gestells kann dann der Sitzbezug eingehängt werden. Beispielsweise kann der Sitzbezug im Wesentlichen rechteckig sein und an seinen gegenüberliegenden Kanten eingefaltete Taschen aufweisen, wobei die Taschen seitlich vernäht und auf die oberen Enden der Möbelstäbe gehängt sind.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Perspektivansicht eines erfindungsgemäßen Sessels,
- Figur 2: eine Perspektivansicht von zwei Möbelstäben des Sessels aus Figur 1, die durch ein erfindungsgemäßes Verbindungselement miteinander verbunden sind,
- Figur 3: eine Perspektivansicht eines Knopfs des erfindungsgemäßen Verbindungselements, sowie
- Figur 4: eine Verbindungsschnur des erfindungsgemäßen Verbindungselements.

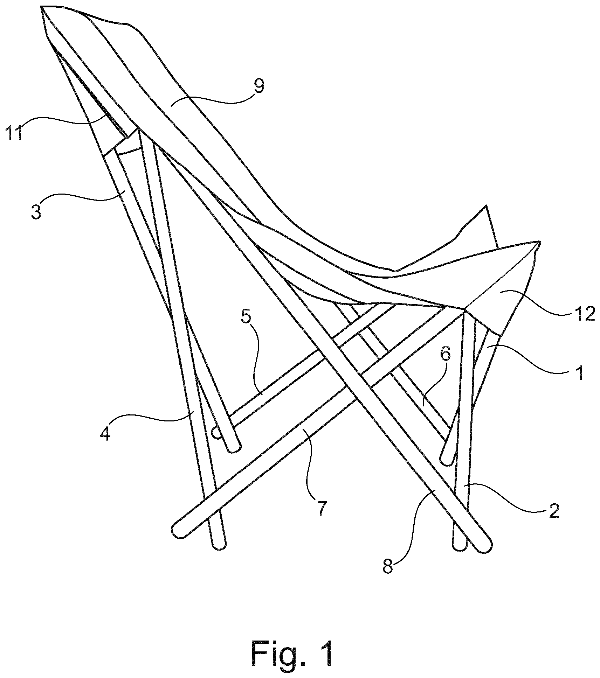

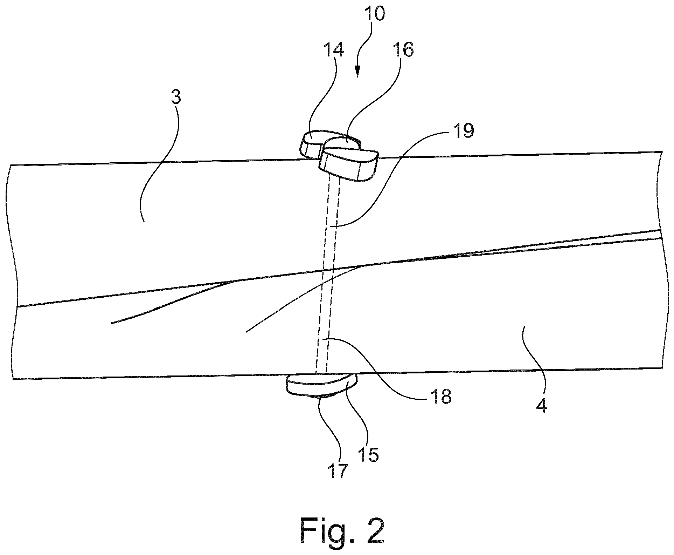

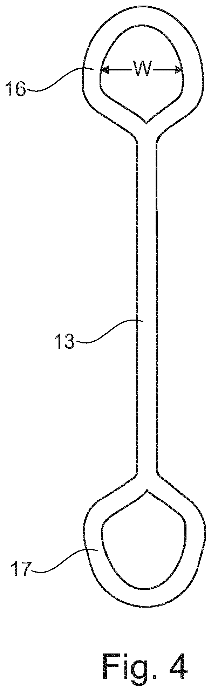

Figur 1 zeigt ein Ausführungsbeispiel eines erfindungsgemäßen Sessels, der aus insgesamt acht Möbelstäben 1-8, einem Sitzbezug 9 und zwölf Verbindungselementen besteht, wobei die Figuren 2-4 den Aufbau und die Funktionsweise eines solchen Verbindungselements 10 verdeutlichen.

Die beiden Möbelstäbe 1, 2 sind mittig durch ein Verbindungselement 10 zu einem vorderen Kreuz miteinander verbunden.

Die beiden Möbelstäbe 3, 4 sind in gleicher Weise mittig durch ein Verbindungselement 10 zu einem hinteren Kreuz miteinander verbunden.

Die Möbelstäbe 5, 6 bilden dagegen auf der linken Seite des Sessels ein Kreuz, während die Möbelstäbe 7, 8 auf der rechten Seite ein Kreuz bilden. Darüber hinaus sind die Möbelstäbe 1-8 jeweils an den Stabenden jeweils paarweise durch ein Verbindungselement 10 miteinander verbunden, so dass sie das in Figur 1 gezeigte Gestell bilden.

Der Sitzbezug 9 ist im Wesentlichen rechteckig und weist an seiner Vorderkante und an seiner Hinterkante jeweils eine umgenähte Tasche 11, 12 auf, wobei die Taschen 11, 12 auf die Stabenden aufgehängt sind, so dass der Sitzbezug 9 von dem Gestell aus den Möbelstäben 1-8 gehalten wird.

Im Folgenden wird nun der Aufbau und die Funktionsweise des Verbindungselements 10 beschrieben, wobei zu erwähnen ist, dass sämtliche Verbindungselemente in dem Sessel identisch aufgebaut sind.

So besteht das Verbindungselement im Wesentlichen aus einer Verbindungsschnur 13 und zwei Knöpfen 14, 15, wobei die beiden Knöpfe in jeweils eine geschlossene Schlaufe 16, 17 an den Enden der Verbindungsschnur 13 eingefädelt werden kann.

Bei der Montage wird zunächst einer der beiden Knöpfe 14, 15 in die zugehörige Schlaufe 16, 17 der Verbindungsschnur 13 eingefädelt. Anschließend wird die Verbindungsschnur 13 dann durch Querbohrungen 18, 19 in den miteinander zu verbindenden Möbelstäben 13, 14 durchgeführt, so dass die andere Schlaufe 16 bzw. 17 frei liegt. Anschließend wird dann der andere Knopf 14 in die frei liegende Schlaufe eingefädelt, so dass die Verbindungsschnur 13 dann die beiden Möbelstäbe 3, 4 miteinander verbindet.

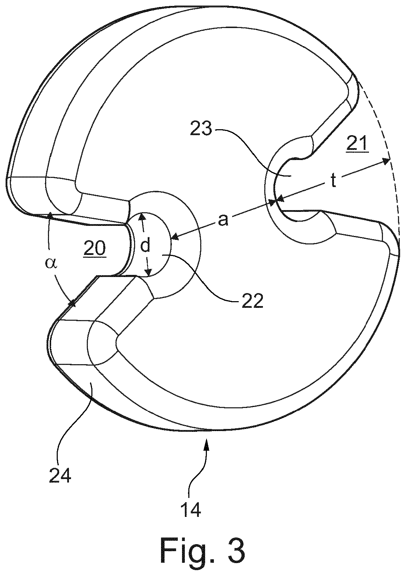

Die Perspektivansicht in Figur 3 zeigt den Knopf 14, wobei sämtliche Knöpfe baugleich sind. Aus der Perspektivansicht ist ersichtlich, dass der Knopf 14 im Wesentlichen kreisscheibenförmig ist und einander gegenüber liegend zwei kreissektorförmige Aussparungen 20, 21 aufweist, die sich jeweils über einen Winkel α ≅ 20° erstrecken.

An ihrem radial innen liegenden Ende münden die beiden kreissektorförmigen Aussparungen 20, 21 in jeweils eine Ausrundung 22, 23 mit einem Durchmesser d, wobei der Durchmesser d der Ausrundungen 22, 23 größer ist als die Dicke der Verbindungsschnur 13.

Zwischen den beiden Aussparungen 20, 21 liegt hierbei in dem Kopf ein Abstand a, der größer ist als die Schlaufenweite w der Schlaufen 16, 17 in den Enden der Verbindungsschnur 13. Dies ist wichtig, damit der Knopf 14 in die Schlaufen 16, 17 der Verbindungsschnur 13 eingefädelt werden kann.

Zum Einfädeln wird der Knopf 14 mit seiner zylindrischen Mantelfläche 24 auf die Oberfläche des Möbelstabs 3 aufgesetzt, wenn die leere Schlaufe 16 aus der Querbohrung 19 herausragt. Anschlie-ßend wird die Schlaufe dann in die Aussparung 20 des Knopfs 14 eingefädelt, bis die Schlaufe 16 in der Ausrundung 20 ruht.

Danach wird der Knopf dann auf seiner zylindrischen Mantelfläche 14 abgerollt, wobei die Verbindungsschnur 13 gespannt wird.

Anschließend wird dann die Schlaufe 16 auch in die Ausrundung 23 auf der gegenüber liegenden Seite des Knopfs 14 eingefädelt, woraufhin der Knopf 14 dann gedreht werden kann, um den Verbindungsvorgang abzuschließen.

### Bezugszeichenliste:

- 1-8: Möbelstäbe
- 9: Sitzbezug
- 10: Verbindungselement
- 11, 12: Taschen des Sitzbezugs
- 13: Verbindungsschnur
- 14, 15: Knöpfe des Verbindungselements
- 16, 17: Schlaufen in den Enden der Verbindungsschnur
- 18, 19: Querbohrungen in den Möbelstäben
- 20, 21: Aussparungen in dem Knopf
- 22, 23: Ausrundung der Aussparungen
- 24: Mantelfläche des Knopfs
- a: Abstand zwischen den Aussparungen
- t: Radiale Tiefe der Aussparungen
- d: Durchmesser der Ausrundung
- α: Winkelerstreckung der Aussparungen
- w: Schlaufenweite der Schlaufen der Verbindungsschnur

## Patentansprüche

1. Möbel mit
a) mehreren Möbelstäben (1-8) und
b) mehreren Verbindungselementen (10) zur mechanischen Verbindung von zwei sich kreuzenden Möbelstäben (1-8) des Möbels, mit
b1) einer Verbindungsschnur (13) zur Durchführung durch jeweils eine Querbohrung (18, 19) in den paarweise mechanisch miteinander zu verbindenden Möbelstäben (1-8), so dass die Verbindungsschnur (13) durch die beiden Querbohrungen (18, 19) verläuft,
b2) jeweils einer geschlossenen Schlaufe (16, 17) an den beiden Enden der Verbindungsschnur (13), und
b3) jeweils einem Knopf (14, 15) zum Einfädeln in die beiden Schlaufen (16, 17) der Verbindungsschnur (13), wobei die Knöpfe (14,15) größer sind als die Querbohrungen (18, 19) in den Möbelstäben (1-8) und somit im eingefädelten Zustand verhindern, dass die Verbindungsschnur (13) durch die Querbohrungen (18, 19) in den Möbelstäben (1-8) rutschen kann, wobei,
b4) die Knöpfe (14, 15) jeweils im Wesentlichen scheibenförmig sind, und
b5) die Knöpfe (14, 15) zum Einfädeln in die Schlaufen (16, 17) der Verbindungsschnur (13) jeweils zwei einander gegenüber liegende Aussparungen (20, 21) aufweisen.

2. Möbel nach Anspruch 1, **dadurch gekennzeichnet,**
a) **dass** die Knöpfe (14, 15) jeweils im Wesentlichen kreisscheibenförmig sind, und
b) **dass** die Aussparungen (20, 21) in den Knöpfen (14, 15) jeweils im Wesentlichen kreissektorförmig sind.

3. Möbel nach Anspruch 2, **dadurch gekennzeichnet, dass sich** die kreissektorförmigen Aussparungen (20, 21) in den Knöpfen (14, 15) jeweils über einen Winkel (α) erstrecken, der im Bereich von 5°-90°, 10°-70°, 20°-50° oder 25°-40° liegt.

4. Möbel nach einem der vorhergehenden Ansprüche, **dadurch gekennzeichnet,**
a) **dass** die Aussparungen (20, 21) an ihrem innen liegenden Ende jeweils in einer Ausrundung enden, wobei die Ausrundungen (22, 23) jeweils einen Durchmesser (d) haben, der größer ist als die Dicke der Verbindungsschnur (13), und/oder
b) **dass** die Ausrundungen (22, 23) jeweils eine Engstelle in den Aussparungen (20, 21) bilden, um beim Einfädeln der Verbindungsschnur (13) ein Einhebeln des Knopfs (14, 15) in die Schlaufe (16, 17) der Verbindungsschnur (13) zu ermöglichen.

5. Möbel nach einem der vorhergehenden Ansprüche, **dadurch gekennzeichnet,**
a) **dass** die Schlaufen (16, 17) jeweils eine bestimmte Schlaufenweite (w) haben,
b) **dass** zwischen den gegenüber liegenden Aussparungen (20, 21) in den scheibenförmigen Knöpfen (14, 15) ein Abstand (a) liegt, der kleiner ist als die Schlaufenweite (w), und/oder
c) **dass** die Summe aus dem Abstand (a) zwischen den gegenüberliegenden Aussparungen (20, 21) und der radialen Tiefe (t) der Aussparungen (20, 21) kleiner ist als die Schlaufenweite (w).

6. Möbel nach einem der vorhergehenden Ansprüche,
**dadurch gekennzeichnet,**
a) **dass** die Verbindungsschnur (13) aus Kunststoff besteht, insbesondere aus Polyamid, und/oder
b) **dass** die Verbindungsschnur (13) im Wesentlichen starr ist ohne wesentliche Elastizität in Längsrichtung, und/oder
c) **dass** die beiden Knöpfe (14, 15) aus Kunststoff bestehen, insbesondere aus einem Thermoplast, insbesondere aus Polyoxymethylen, und/oder
d) **dass** die Möbelstäbe (1-8) aus Holz bestehen, insbesondere aus Esche, und/oder
e) **dass** die Möbelstäbe (1-8) jeweils einen runden Querschnitt haben, insbesondere einen kreisrunden Querschnitt, und/oder
f) **dass** die miteinander verbundenen Möbelstäbe (1-8) im verbundenen Zustand relativ zueinander schwenkbar sind.

7. Möbel nach einem der vorhergehenden Ansprüche, **dadurch gekennzeichnet,**
a) **dass** die Möbelstäbe (1-8) ein Gestell bilden, und
b) **dass** ein Sitzbezug (9) in das Gestell eingehängt ist.

8. Möbel nach Anspruch 7, **dadurch gekennzeichnet,**
a) **dass** das Gestell an der Rückseite ein erstes Kreuz aus zwei Möbelstäben (3, 4) aufweist, wobei die beiden Möbelstäbe (3, 4) des ersten Kreuzes mittig durch ein Verbindungselement (10) nach einem der Ansprüche 1 bis 7 miteinander verbunden sind,
b) **dass** das Gestell an der Vorderseite ein zweites Kreuz aus zwei Möbelstäben (1, 2) aufweist, wobei die beiden Möbelstäbe (1, 2) des zweiten Kreuzes mittig durch ein Verbindungselement (10) nach einem der Ansprüche 1 bis 7 miteinander verbunden sind,
c) **dass** das Gestell seitlich ein drittes Kreuz aus zwei Möbelstäben (5, 6) aufweist, wobei die beiden Möbelstäbe (5, 6) des dritten Kreuzes mittig durch ein Verbindungselement (10) nach einem der Ansprüche 1 bis 7 miteinander verbunden sind,
d) **dass** das Gestell seitlich gegenüber dem dritten Kreuz ein viertes Kreuz aus zwei Möbelstäben (7, 8) aufweist, wobei die beiden Möbelstäbe (7, 8) des vierten Kreuzes mittig durch ein Verbindungselement (10) nach einem der Ansprüche 1 bis 7 miteinander verbunden sind,
e) **dass** das rückseitige erste Kreuz mit den beiden seitlichen Kreuzen verbunden ist und zwar durch Verbindungselemente (10) nach einem der Ansprüche 1 bis 7 jeweils an den Enden der Möbelstäbe (1-8), und
f) **dass** das vordere zweite Kreuz mit den beiden seitlichen Kreuzen verbunden ist und zwar durch Verbindungselemente (10) nach einem der Ansprüche 1 bis 7 jeweils an den Enden der Möbelstäbe (1-8).

9. Möbel nach Anspruch 8, **dadurch gekennzeichnet,**
a) **dass** der Sitzbezug (9) eingehängt ist in die oberen Enden der Möbelstäbe (1-8), und/oder
b) **dass** der Sitzbezug (9) im Wesentlichen rechteckig ist und an seinen gegenüberliegenden Kanten eingefaltete Taschen (11, 12) aufweist, wobei die Taschen (11, 12) auf die oberen Enden der Möbelstäbe (1-8) gehängt sind.

## Claims

1. Furniture with
a) a plurality of furniture rods (1-8) and
b) a plurality of connecting elements (10) for mechanically connecting two intersecting furniture rods (1-8) of the furniture, having
b1) a connecting cord (13) for passing through a respective transverse bore (18, 19) in the furniture rods (1-8) to be mechanically connected to one another in pairs, so that the connecting cord (13) passes through the two transverse bores (18, 19)
b2) a closed loop (16, 17) at each of the two ends of the connecting cord (13), and
b3) in each case a knob (14, 15) for threading into the two loops (16, 17) of the connecting cord (13), the knobs (14, 15) being larger than the transverse holes (18, 19) in the furniture rods (1-8) and thus, in the threaded state, preventing the connecting cord (13) from slipping through the transverse holes (18, 19) in the furniture rods (1-8),
wherein
b4) the knobs (14, 15) are each substantially disc-shaped, and
b5) the knobs (14, 15) each have two mutually opposite recesses (20, 21) for threading into the loops (16, 17) of the connecting cord (13).

2. Furniture according to claim 1, **characterized in,**
a) **that** the knobs (14, 15) are each substantially circular disc-shaped, and
b) **that** the recesses (20, 21) in the knobs (14, 15) are each substantially circle-segment-shaped.

3. Furniture according to claim 2, **characterized in that** the circle-segment-shaped recesses (20, 21) in the knobs (14, 15) each extend over an angle (α) which is in the range of 5°-90°, 10°-70°, 20°-50° or 25°-40°.

4. Furniture according to one of the preceding claims, **characterized in,**
a) **that** the recesses (20, 21) each end at their inner end in a rounded-out portion, the rounded-out portions (22, 23) each having a diameter (d) which is greater than the thickness of the connecting cord (13), and/or
b) **that** the rounded-out portions (22, 23) each form a narrow point in the recesses (20, 21) in order to allow the button (14, 15) to be levered into the loop (16, 17) of the connecting cord (13) when the connecting cord (13) is threaded.

5. Furniture according to any of the preceding claims, **characterized in,**
a) **that** the loops (16, 17) each have a certain loop width (w),
b) **that** there is a distance (a) between the opposing recesses (20, 21) in the disc-shaped knobs (14, 15) which is smaller than the loop width (w), and/or
c) **that** the sum of the distance (a) between the opposing recesses (20, 21) and the radial depth (t) of the recesses (20, 21) is smaller than the loop width (w).

6. Furniture according to one of the preceding claims,
**characterized in that**
a) that the connecting cord (13) is made of plastic, in particular polyamide, and/or
b) that the connecting cord (13) is substantially rigid without substantial elasticity in the longitudinal direction, and/or
c) that the two knobs (14, 15) are made of plastic, in particular of a thermoplastic, in particular of polyoxymethylene, and/or
d) that the furniture rods (1-8) are made of wood, in particular of ash, and/or
e) that the furniture rods (1-8) each have a round cross-section, in particular a circular cross-section, and/or
f) that the interconnected furniture rods (1-8) are pivotable relative to each other in the connected state.

7. Furniture according to one of the preceding claims, **characterized in,**
a) **that** the furniture rods (1-8) form a frame, and
b) **that** a seat cover (9) is suspended in the frame.

8. Furniture according to claim 7, **characterized in,**
a) **that** the frame has, at the rear, a first cross of two furniture rods (3, 4), the two furniture rods (3, 4) of the first cross being connected to one another centrally by a connecting element (10) according to one of claims 1 to 7,
b) **that** the frame has at the front side a second cross of two furniture rods (1, 2), wherein the two furniture rods (1, 2) of the second cross are centrally connected to each other by a connecting element (10) according to one of the claims 1 to 7,
c) **that** the frame laterally has a third cross of two furniture rods (5, 6), the two furniture rods (5, 6) of the third cross being connected to each other centrally by a connecting element (10) according to one of the claims 1 to 7,
d) **that** the frame has, laterally opposite the third cross, a fourth cross comprising two furniture rods (7, 8), the two furniture rods (7, 8) of the fourth cross being connected to one another centrally by a connecting element (10) according to one of claims 1 to 7,
e) **that** the rear first cross is connected to the two side crosses by connecting elements (10) according to one of the claims 1 to 7 respectively at the ends of the furniture rods (1-8), and
f) **that** the front second cross is connected to the two lateral crosses by connecting elements (10) according to one of the claims 1 to 7 respectively at the ends of the furniture rods (1-8).

9. Furniture according to claim 8, **characterized in,**
a) **that** the seat cover (9) is hooked into the upper ends of the furniture rods (1-8), and/or
b) **that** the seat cover (9) is substantially rectangular and has pockets (11, 12) folded in at its opposite edges, the pockets (11, 12) being hung on the upper ends of the furniture rods (1-8).

## Revendications

1. Meuble avec
a) plusieurs barres de meuble (1-8) et
b) plusieurs éléments de raccordement (10) pour raccorder de manière mécanique deux barres de meuble (1-8) se croisant du meuble, avec
b1) un cordon de raccordement (13) à faire passer à travers respectivement un alésage transversal (18, 19) dans les barres de meuble (1-8) à raccorder entre elles par paire mécaniquement de sorte que le cordon de raccordement (13) s'étend à travers les deux alésages transversaux (18, 19),
b2) respectivement une boucle fermée (16, 17) sur les deux extrémités du cordon de raccordement (13), et
b3) respectivement un bouton (14, 15) à enfiler dans les deux boucles (16, 17) du cordon de raccordement (13), dans lequel les boutons (14, 15) sont plus grands que les alésages transversaux (18, 19) dans les barres de meuble (1-8) et empêchent ainsi dans l'état enfilé le glissement éventuel du cordon de raccordement (13) à travers les alésages transversaux (18, 19) dans les barres de meuble (1-8),
dans lequel
b4) les boutons (14, 15) sont respectivement sensiblement en forme de disque, et
b5) les boutons (14, 15) destinés à être enfilés dans les boucles (16, 17) du cordon de raccordement (13) présentent respectivement deux évidements (20, 21) se faisant face l'un l'autre.

2. Meuble selon la revendication 1, **caractérisé en ce**
a) **que** les boutons (14, 15) sont respectivement sensiblement en forme de disque circulaire, et
b) **que** les évidements (20, 21) dans les boutons (14, 15) sont respectivement sensiblement en forme de secteur circulaire.

3. Meuble selon la revendication 2, **caractérisé en ce que** les évidements (20, 21) en forme de secteur circulaire dans les boutons (14, 15) s'étendent respectivement sur un angle (α) qui se situe dans la plage de 5°-90°, 10°-70°, 20°-50° ou de 25°-40°.

4. Meuble selon l'une quelconque des revendications précédentes, **caractérisé en ce**
a) **que** les évidements (20, 21) se terminent sur leur extrémité située à l'intérieur respectivement en un arrondi, dans lequel les arrondis (22, 23) ont respectivement un diamètre (d) qui est plus grand que l'épaisseur du cordon de raccordement (13), et/ou
b) **que** les arrondis (22, 23) forment respectivement un rétrécissement dans les évidements (20, 21) pour permettre, lorsque le cordon de raccordement (13) est enfilé, une introduction par effet de levier du bouton (14, 15) dans la boucle (16, 17) du cordon de raccordement (13).

5. Meuble selon l'une quelconque des revendications précédentes, **caractérisé en ce**
a) **que** les boucles (16, 17) ont respectivement une certaine largeur de boucle (w),
b) **que** se trouve entre les évidements (20, 21) se faisant face dans les boutons (14, 15) en forme de disque un espacement (a) qui est inférieur à la largeur de boucle (w), et/ou
c) **que** la somme de l'espacement (a) entre les évidements (20, 21) se faisant face et la profondeur radiale (t) des évidements (20, 21) est inférieure à la largeur de boucle (w).

6. Meuble selon l'une quelconque des revendications précédentes,
**caractérisé en ce**
a) **que** le cordon de raccordement (13) est constitué de matière plastique, en particulier de polyamide, et/ou
b) **que** le cordon de raccordement (13) est sensiblement rigide sans élasticité majeure dans le sens longitudinal, et/ou
c) **que** les deux boutons (14, 15) sont constitués de matière plastique, en particulier d'une matière thermoplastique, en particulier de polyoxyméthylène, et/ou
d) **que** les barres de meuble (1-8) sont constituées de bois, en particulier de frêne, et/ou
e) **que** les barres de meuble (1-8) ont respectivement une section transversale ronde, en particulier une section transversale ronde circulaire, et/ou
f) **que** les barres de meuble (1-8) raccordées entre elles peuvent être pivotées dans l'état raccordé les unes par rapport aux autres.

7. Meuble selon l'une quelconque des revendications précédentes, **caractérisé en ce**
a) **que** les barres de meuble (1-8) forment un châssis, et
b) **qu'**une housse de siège (9) est suspendue dans le châssis.

8. Meuble selon la revendication 7, **caractérisé en ce**
a) **que** le châssis présente sur le côté arrière un premier croisillon composé de deux barres de meuble (3, 4), dans lequel les deux barres de meuble (3, 4) du premier croisillon sont raccordées l'une à l'autre au centre par un élément de raccordement (10) selon l'une quelconque des revendications 1 à 7,
b) **que** le châssis présente sur le côté avant un deuxième croisillon composé de deux barres de meuble (1, 2), dans lequel les deux barres de meuble (1, 2) du deuxième croisillon sont raccordées l'une à l'autre au centre par un élément de raccordement (10) selon l'une quelconque des revendications 1 à 7,
c) **que** le châssis présente sur le côté un troisième croisillon composé de deux barres de meuble (5, 6), dans lequel les deux barres de meuble (5, 6) du troisième croisillon sont raccordées l'une à l'autre au centre par un élément de raccordement (10) selon l'une quelconque des revendications 1 à 7,
d) **que** le châssis présente sur le côté en vis-à-vis du troisième croisillon un quatrième croisillon composé de deux barres de meuble (7, 8), dans lequel les deux barres de meuble (7, 8) du quatrième croisillon sont raccordées l'une à l'autre au centre par un élément de raccordement (10) selon l'une quelconque des revendications 1 à 7,
e) **que** le premier croisillon côté arrière est raccordé aux deux croisillons latéraux, à savoir par des éléments de raccordement (10) selon l'une quelconque des revendications 1 à 7 respectivement sur les extrémités des barres de meuble (1-8), et
f) **que** le deuxième croisillon avant est raccordé aux deux croisillons latéraux, à savoir par des éléments de raccordement (10) selon l'une quelconque des revendications 1 à 7 respectivement sur les extrémités des barres de meuble (1-8).

9. Meuble selon la revendication 8, **caractérisé en ce**
a) **que** la housse de siège (9) est accrochée dans les extrémités supérieures des barres de meuble (1-8), et/ou
b) **que** la housse de siège (9) est sensiblement rectangulaire et présente des poches (11, 12) repliées sur ses bords se faisant face, dans lequel les poches (11, 12) sont attachées sur les extrémités supérieures des barres de meuble (1-8).
